# EUROPEAN PATENT APPLICATION

(11) **EP 3 564 679 A1**
(43) Date of publication of application: **06.11.2019**
(21) Application number: 17889505.8
(22) Date of filing: 22.12.2017
(51) Int. Cl.: G01N 35/00, C12M 1/00, C12Q 1/68

(54) **ANALYSIS DEVICE**

(30) Priority: 28.12.2016 JP 2016256252
(71) Applicant: Kabushiki Kaisha DNAFORM, Yokohama-shi Kanagawa 230-0046 (JP)
(72) Inventor: TSUJIMARU Koichiro, Yokohama-shi Kanagawa 230-0046 (JP)
(74) Representative: J A Kemp LLP
(86) International application number: PCT/JP2017/046055
(87) International publication number: WO 2018/123837

(57) **Abstract**

The present invention provides a new smaller analysis device that can heat an analysis chip. The analysis device includes a set section in which an analysis chip is to be set; a housing chamber that accommodates the set section; a heating section that heats the analysis chip set in the set section; and an analysis section that analyzes the analysis chip set in the set section, wherein the housing chamber serves as an analysis chamber of the analysis chip set in the set section in the state where the set section is accommodated in the housing chamber, the analysis section is disposed at a position where the analysis chip set in the set section is analyzed in the state where the set section is accommodated in the housing chamber, and the heating section is a heating plate and is disposed at a position where the analysis chip set in the set section is heated in the state where the set section is accommodated in the housing chamber.

## Description

### TECHNICAL FIELD

The present invention relates to an analysis device that analyzes genes and the like using, for example, an analysis chip.

### BACKGROUND ART

With the development of genetic engineering, it becomes common to add a sample to an analysis chip, set the analysis chip in an analysis device, and perform gene amplification with respect to the sample in the analysis chip and analysis of the thus-obtained amplification products in the analysis device. In the gene amplification, heating is usually essential for annealing of a primer to a template, extension of a strand from the primer, dissociation of the template and the extended strand, and the like. Thus, a heating mechanism for heating the analysis chip is provided in the analysis device. As the heating mechanism, for example, a method using a blower fan and a heating unit is known. That is, the heating mechanism is a mechanism for heating the analysis chip by setting the analysis chip in the analysis chamber of the analysis device, blowing air by the blower fan, and heating the blowing air (for example, Patent Literature 1).

### Citation List

### Patent Literature

Patent Literature 1: Japanese Patent No. 4281877

### SUMMARY OF INVENTION

### Technical Problem

However, in these years, there is a demand for a smaller analysis device, and there is a problem that the downsizing of the analysis device is difficult if the blower fan is provided.

Hence, the present invention is intended to provide a new smaller analysis device. Solution to Problem

In order to achieve the above object, the present invention provides an analysis device including: a set section in which an analysis chip is to be set; a housing chamber that accommodates the set section; a heating section that heats the analysis chip set in the set section; and an analysis section that analyzes the analysis chip set in the set section, wherein the housing chamber serves as an analysis chamber of the analysis chip set in the set section in the state where the set section is accommodated in the housing chamber, the analysis section is disposed at a position where the analysis chip set in the set section is analyzed in the state where the set section is accommodated in the housing chamber, and the heating section is a heating plate and is disposed at a position where the analysis chip set in the set section is heated in the state where the set section is accommodated in the housing chamber.

### Advantageous Effects of Invention

According to the analysis device of the present invention, by providing the heating plate, the analysis chip can be heated and the analysis device can be downsized.

### BRIEF DESCRIPTION OF DRAWINGS

FIG. 1 is a perspective view of an analysis device showing an embodiment of the present invention.
FIG. 2 is a perspective view of an analysis device showing an embodiment of the present invention.
FIG. 3 is a schematic view of a set section in an embodiment of the present invention.

### DESCRIPTION OF EMBODIMENTS

The analysis device of the present invention further includes a driving section that rotates the analysis chip set in the set section in the housing chamber, for example.

In the analysis device of the present invention, for example, the heating section is disposed in the housing chamber.

In the analysis device of the present invention, for example, the heating section is a ceramic heat plate.

In the analysis device of the present invention, for example, the analysis chip to be set in the set section has a plurality of regions to be analyzed at positions radially from the center thereof in the plane direction.

The analysis device of the present invention further includes a light emission section that emits light, for example. In the analysis device of the present invention, for example, the analysis section includes a light detection section that detects light.

In the analysis device of the present invention, for example, in the state where the set section is accommodated in the housing chamber, the analysis chip is irradiated with light from the center position of the analysis chip set in the set section and light from the analysis chip is detected at the outer periphery of the analysis chip.

In the analysis device of the present invention, for example, the set section has a circular support and a wall protruding upward from the outer periphery of the support, the light detection section is disposed on the inner wall of the wall of the set section, and in the state where the housing chamber accommodates the set section, the light emission section is disposed at the center position of the support of the set section.

In the analysis device of the present invention, for example, the analysis section includes a plurality of the light detection sections, and the plurality of light detection sections are disposed circumferentially on the inner wall of the wall of the set section.

In the analysis device of the present invention, for example, the housing chamber has an opening through which the set section can be taken in and out.

The analysis device of the present invention further includes: a temperature measurement section that measures a temperature of the housing chamber; and a heating control unit that controls heating by the heating section, wherein the heating control unit controls the heating by the heating section based on the temperature measured by the temperature measurement section.

The analysis device of the present invention is for use in a genetic analysis, for example.

Examples of the analysis device of the present invention are described below with reference to the drawings. It is to be noted that these are merely for illustrative purposes and do not limit the present invention.

### First Embodiment

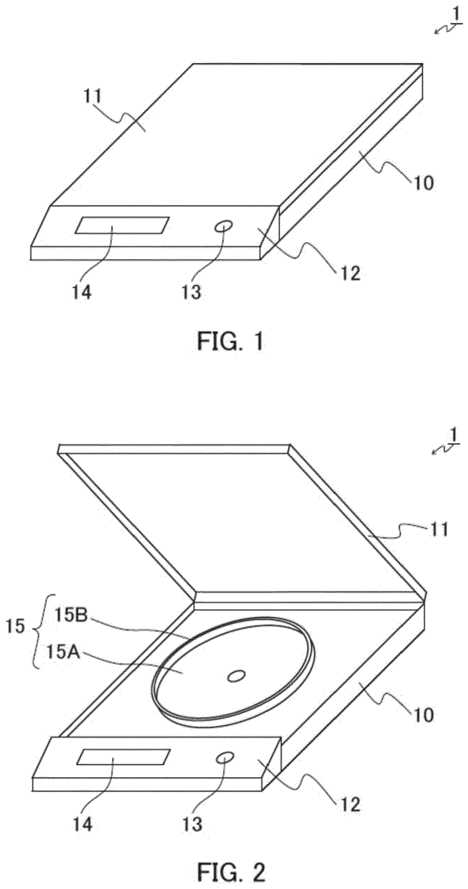

FIGs. 1 and 2 show an example of the analysis device of the present invention. FIGs. 1 and 2 are perspective views showing the outline of an analysis device 1. The analysis device 1 includes a main body 10, a lid 11, and an operation section 12. The main body 10 is a recess with an open top and includes a set section 15 in which the analysis chip is to be set at the center thereof. A first end of the lid 11 is connected to one end of the main body 10 to be openable and closable. As a second end of the lid 11 is raised to open the lid 11, the inside of the main body 10 is exposed, and as the second end of the lid 11 is lowered to close the lid 11, the inside of the main body 10 is shut off from the outside. In the analysis device 1, a space surrounded by the recess of the main body 10 and the lid 11 in the state where the lid 11 is closed serves as the housing chamber, and the housing chamber during use of the analysis device 1 serves as an analysis chamber. A heating section that heats the analysis chip set in the set section 15 and an analysis section that analyzes the analysis chip are provided in the housing chamber. The set section 15 has a support 15A on which the analysis chip is to be placed, and a wall (annular protrusion) 15B protruding upward from the outer periphery of the support 15A. For example, the position of the analysis chip set in the set section 15 can be fixed by the wall 15B. The operation section 12 is disposed in front of the main body 10 and includes a power button 13, a display section 14, and the like.

The analysis device 1 is used, for example, as follows. First, the lid 11 of the analysis device 1 is opened automatically or manually, and the analysis chip is set in the set section 15 of the main body 10. The lid 11 is then closed automatically or manually. In the analysis device 1, the analysis chip is accommodated by closing the lid 11 with respect to the recess of the main body 10, and the housing chamber becomes the analysis chamber for the analysis chip. In the housing chamber in the analysis device 1, the analysis chip set in the set section 15 is heated by the heating section and the analysis chip is analyzed by the analysis section.

The heating section is, for example, a heat plate such as a ceramic heat plate. The position of the heating section is not particularly limited, and for example, the following positional relation can be given. The position of the heating section is not limited as long as the analysis chip set in the set section 15 can be heated in the state where the analysis chip is set in the set section 15 of the main body 10 and the lid 11 is closed. Thus, the heating section may be disposed in the set section 15 of the main body 10 or on the lid 11 covering the set section 15, for example. That is, for example, the heating section may be disposed at the position in the analysis device 1 corresponding to the position of the set section 15 in the state where the analysis chip is set in the set section 15 and the lid 11 is closed. Specifically, the heating section may be positioned at the upper level of the set section 15 (for example, the lid 11 side), or may be positioned at the lower level of the set section 15 (lower part of the set section 15), for example.

The analysis device 1 may further include a temperature measurement section that measures the temperature of the housing chamber (analysis chamber) and a heating control unit that controls the heating by the heating section. In this case, the temperature measurement section measures the temperature of the housing chamber, and the heating control unit controls the heating by the heating section so that the temperature of the housing chamber reaches a predetermined temperature (preset temperature), thereby achieving an analysis with higher accuracy. The temperature measurement section is, for example, a thermal sensor. In the analysis device 1, for example, the thermal sensor is connected to the heating control unit and the heating control unit is connected to the heating section. The predetermined temperature can be appropriately determined, for example, depending on the reactions of the samples to be analyzed, and the temperature can be maintained at a preset temperature, for example, by the temperature measurement section, the heating control unit, and the heating section.

The analysis device 1 may further include a driving section that rotates the analysis chip set in the set section 15, for example. By providing the driving section, in the state where the analysis chip is set and the lid 11 is closed, the analysis chip set in the set section 15 can be rotated inside the housing chamber. As described above, in the analysis device 1, a centrifugal force is generated in the analysis chip by rotating the analysis chip. By utilizing this centrifugal force, for example, a reaction solution in the analysis chip can be mixed or moved within the analysis chip. The analysis device 1 can heat the analysis chip by the heating section while rotating the analysis chip by the driving section. Thus, for example, the analysis chip can be uniformly heated in the analysis device 1 so that temperature unevenness in the analysis chip can be suppressed. As a result, for example, the temperature setting in the gene amplification reaction becomes uniform, thereby achieving an analysis with higher accuracy.

The analysis chip to be set in the set section 15 is, for example, a chip for analyzing samples. The analysis chip has, for example, one or more regions to be analyzed. The region to be analyzed is, for example, a region in which a sample to be analyzed, a reaction solution for the sample, and the like are placed. The region to be analyzed may be a region directly or indirectly analyzed by the analysis section of the analysis device 1. Specifically, the region to be analyzed is a region in which various signals to be analyzed by the analysis section of the analysis device 1 are generated. It is to be noted that, the analysis section of the analysis device 1 may detect the generated signal at the position of the region to be analyzed or may detect the generated signal at a position different from the region to be analyzed, for example. That is, for example, the region to be analyzed may be the region itself to be analyzed or a region different from the region itself to be analyzed. For example, when light or the like is generated in the region to be analyzed, light is detected by the analysis section of the analysis device 1. In this case, the light in the region to be analyzed may be detected, or the light at a position different from the region to be analyzed may be detected.

Preferably, the analysis chip has a plurality of regions to be analyzed, for example, at positions radially from the center thereof in the plane direction. When the analysis chip is rotated as described above, for example, the center in the plane direction is a rotational center. The plurality of regions to be analyzed may be placed on the same circumference or may be placed concentrically, for example. The analysis chip further includes, for example, an introduction port and a flow channel, and the introduction port communicates with the respective regions to be analyzed through the flow channels. The introduction port is, for example, an introduction port for introducing liquids such as samples, reagents, and the mixtures thereof into the analysis chip. When the liquid is introduced from the introduction port, the liquid passes through the flow channel and is introduced into the region to be analyzed. At this time, as described above, by rotating the analysis chip to generate a centrifugal force, the flow of the liquid through the flow channel can be promoted, for example. The introduction port and the flow channel may have, for example, a 1:1 relationship, or each of the regions to be analyzed may communicate with one introduction port through a plurality of branched flow channels.

The shape of the analysis chip is not particularly limited and may be, for example, a circular shape.

For example, a mixture of a sample and a reagent to be reacted by heating may be introduced into the region to be analyzed of the analysis chip, or the sample and the reagent may be mixed in the region to be analyzed by placing the reagent in advance and then introducing the sample. In the analysis chip, for example, when a gene is amplified to detect the thus-obtained amplification product, for example, amplification reagents such as primers; probes; intercalators; enzymes such as polymerases; and the like can be used as the reagent.

The type of the analysis section in the analysis device 1 is not particularly limited, and can be appropriately determined depending on, for example, the analysis method for the heated reaction solution in the analysis chip. When the heated reaction solution is analyzed based on light, the analysis section includes, for example, a light detection section that detects light. The light detection section is, for example, a light receiving section that receives light, and may be an optical sensor or the like. The light detection section may be, for example, photodiodes.

For example, the analysis device 1 may perform an analysis by exciting the heated reaction solution in the analysis chip by light irradiation and receiving light emitted from the heated reaction solution. In this case, the analysis device 1 includes, for example, a light emission section that emits light, and the analysis section is, for example, the light receiving section. The light emission section is not particularly limited, and, for example, LEDs and the like may be used. As the light receiving section, for example, the above-described photodiodes and the like may be used.

In the analysis device 1, the positions of the light emission section and the analysis section are not particularly limited. For example, the analysis device 1 may be configured to irradiate the analysis chip with light from the center position (e.g., the rotational center) of the analysis chip set in the set section 15 in the housing chamber in the state where the lid 11 is closed, and to detect (for example, receive) light from the analysis chip at the outer periphery of the analysis chip.

Thus, in the analysis device of the present invention, the positions of the light emission section and the analysis section are not particularly limited as long as the light emission section and the analysis section are disposed in the housing chamber in the state where the lid 11 is closed, for example.

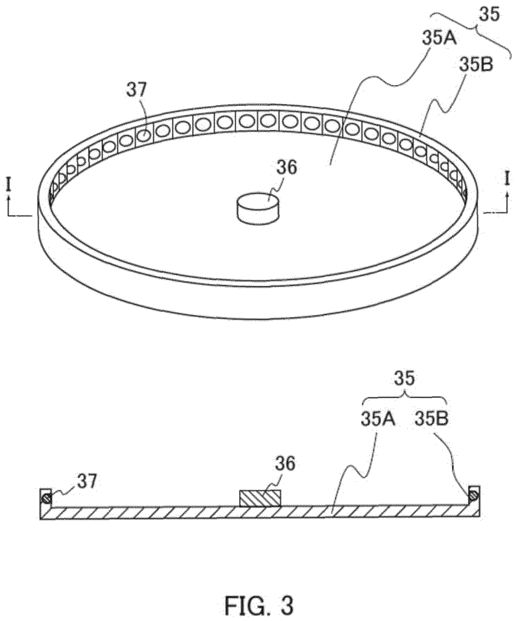

FIG. 3 shows an example of the light emission section and the analysis section. FIG. 3 is a schematic view showing another example of the set section in the analysis device 1. The upper view is a perspective view, and the lower view is a cross-sectional view taken along the line I-I of the perspective view. As shown in FIG. 3, the set section 35 is a circular recessed body having a circular support 35A and a wall (annular protrusion) 35B protruding upward from the outer periphery of the support 35A. The set section 35 can fix the analysis chip by means of the wall 35B when the analysis chip is placed on the support 35A in the recessed body. The set section 35 includes a light emission section 36 at the center of the support 35A for irradiating the analysis chip set in the set section 35 with light. The light emission section 36 is, for example, an LED or the like as described above. In the set section 35, a plurality of light detection sections 37 are disposed circumferentially on the inner wall of the wall 35B. The light detection section 37 is, as described above, a light receiving section that receives light from the analysis chip and may be photodiodes and the like, for example. The analysis chip to be set in the set section 35 has, for example, a through hole at the center thereof, through which the light emission section 36 penetrates, and the regions to be analyzed disposed radially from the center thereof.

The set section 35 can irradiate the analysis chip placed on the support 35A with light from the center thereof by disposing the light emission section 36 on the center of the support 35A. As described above, since the analysis chip has the regions to be analyzed disposed radially, each of the regions to be analyzed can be irradiated with light efficiently by emitting the light from the center. Furthermore, at the time of light irradiation, the analysis chip can be irradiated with light from the rotational center of the analysis chip by rotating the analysis chip as described above.

The set section 35 has an annular wall 35B on the outer periphery of the support 35A and has a plurality of light detection sections 37 on the inner wall of the wall 35B. Thus, the analysis chip can be irradiated with light from the center, and light generated from the analysis chip can be detected (received) by the light detection sections 37 on the inner wall of the wall 35B. As described above, since the analysis chip has the plurality of regions to be detected disposed radially, with respect to each of the regions to be detected, light can be detected by the plurality of light detection sections 37 disposed circumferentially on the inner wall of the outer peripheral wall 35B.

Since an analysis device and an analysis chip are generally required to be small, thinning of the analysis chip is also preferable. In such a case, for example, while it is considered that the optical path length is shortened and the detection sensitivity is lowered when light is emitted in the thickness direction of the analysis chip, by receiving light in the outer circumferential direction with respect to the rotational center as in this embodiment, it is possible to secure a satisfactory optical path length and suppress a decrease in the detection sensitivity.

The set section 35 is not limited to the configuration shown in FIG. 3, and may include the light emission section on the inner wall of the wall 35B and the light detection section at the center of the support 35A, for example.

The driving section includes, for example, a support section and a motor. The support section rotatably supports the analysis chip set in the set section 15, is connected to the motor, and can rotate the analysis chip by driving the support body by the motor, for example.

In the analysis device 1, the display section 14 can display, for example, temperatures, analytical results, and the like.

FIGs. 1 and 2 show a configuration of an analysis device of the present invention in which the analysis chip is set in the set section by opening and closing the lid. This configuration, however, is for illustrative purposes and the present invention is not limited thereto. The analysis device of the present invention may be configured that it includes a main body and a tray, and the tray is automatically or manually taken in and out from an opening on the front surface of the main body, for example. In this case, the tray includes the set section. In this configuration, the space for accommodating the tray in the main body serves as the housing chamber, and the housing chamber serves as the analysis chamber during use of the analysis device, for example.

In this configuration, first, the tray accommodated in the housing chamber in the analysis device is pulled out from the opening, and the analysis chip is set in the set section of the tray. The tray is then automatically or manually inserted into the housing chamber from the opening. By accommodating the tray in which the analysis chip is set in the housing chamber of the analysis device, the housing chamber becomes the analysis chamber of the analysis chip. Then, in the housing chamber in the analysis device, the analysis chip set in the set section of the tray is heated by the heating section and the analysis chip is analyzed by the analysis section. The positions of the heating section and the analysis section are not particularly limited, and as described above, the positions are not limited as long as the analysis chip can be heated and analyzed in the state where the set section in which the analysis chip is set is accommodated in the housing chamber.

While the present invention has been described above with reference to embodiments and examples, the present invention is by no means limited thereto. Various changes and modifications that may become apparent to those skilled in the art may be made in the configuration and specifics of the present invention without departing from the scope of the present invention.

This application claims priority from Japanese Patent Application No. 2016-256252 filed on December 28, 2016. The entire subject matter of the Japanese Patent Application is incorporated herein by reference.

### Industrial Applicability

As described above, according to the present embodiment, by providing the heating plate, the analysis chip can be heated and the analysis device can be downsized.

### Reference Signs List

- 1: analysis device
- 10: main body
- 11: lid
- 12: operation section
- 13: power button
- 14: display section
- 15, 35: set section
- 36: light emission section
- 37: light detection section

## Claims

1. An analysis device comprising:
a set section in which an analysis chip is to be set;
a housing chamber that accommodates the set section;
a heating section that heats the analysis chip set in the set section; and
an analysis section that analyzes the analysis chip set in the set section, wherein
the housing chamber serves as an analysis chamber of the analysis chip set in the set section in the state where the set section is accommodated in the housing chamber,
the analysis section is disposed at a position where the analysis chip set in the set section is analyzed in the state where the set section is accommodated in the housing chamber, and
the heating section is a heating plate and is disposed at a position where the analysis chip set in the set section is heated in the state where the set section is accommodated in the housing chamber.

2. The analysis device according to claim 1, further comprising:
a driving section that rotates the analysis chip set in the set section in the housing chamber.

3. The analysis device according to claim 1 or 2, wherein the heating section is disposed in the housing chamber.

4. The analysis device according to any one of claims 1 to 3, wherein the heating section is a ceramic heat plate.

5. The analysis device according to any one of claims 1 to 4, wherein the analysis chip to be set in the set section has a plurality of regions to be analyzed at positions radially from a center thereof in a plane direction.

6. The analysis device according to any one of claims 1 to 5, further comprising:
a light emission section that emits light, wherein
the analysis section comprises a light detection section that detects light.

7. The analysis device according to claim 6, wherein
the set section has a circular support and a wall protruding upward from an outer periphery of the support,
the light detection section is disposed on an inner wall of the wall of the set section, and
the light emission section is disposed at a center position of the support of the set section in the state where the housing chamber accommodates the set section.

8. The analysis device according to claim 7, wherein
the analysis section comprises a plurality of the light detection sections, and
the plurality of light detection sections are disposed circumferentially on the inner wall of the wall of the set section.

9. The analysis device according to any one of claims 1 to 8, wherein the housing chamber has an opening through which the set section can be taken in and out.

10. The analysis device according to any one of claims 1 to 9, further comprising:
a temperature measurement section that measures a temperature of the housing chamber; and
a heating control unit that controls heating by the heating section, wherein
the heating control unit that controls heating by the heating section based on the temperature measured by the temperature measurement section.

11. The analysis device according to any one of claims 1 to 10, wherein the analysis device is for use in a genetic analysis.
